# EUROPÄISCHE PATENTSCHRIFT

(11) **EP 1 639 767 B1**
(45) Veröffentlichungstag und Bekanntmachung des Hinweises auf die Patenterteilung: **24.07.2013**
(21) Anmeldenummer: 04740258.1
(22) Anmeldetag: 24.06.2004
(51) Int. Cl.: H04B 5/02

(54) **SYSTEM UND VERFAHREN ZUR KOMMUNIKATIONSÜBERWACHUNG**
COMMUNICATION MONITORING SYSTEM AND METHOD
SYSTEME ET PROCEDE DE CONTROLE DE COMMUNICATION

(30) Priorität: 02.07.2003 DE 10329846
(43) Veröffentlichungstag der Anmeldung: 29.03.2006
(73) Patentinhaber: F. Hoffmann-La Roche AG, 4070 Basel (CH); Roche Diagnostics GmbH, 68305 Mannheim (DE)
(72) Erfinder: EBERHART, Andreas, CH-3414 Oberburg (CH)
(74) Vertreter: Rentsch Partner AG
(86) Internationale Anmeldenummer: PCT/EP2004/006845
(87) Internationale Veröffentlichungsnummer: WO 2005/004413

(56) Entgegenhaltungen:
- WO-A-01/22379
- WO-A-01/32261
- WO-A-02/086837
- DE-A- 19 941 580
- GB-A- 2 377 776
- US-A- 5 381 129
- US-B1- 6 441 747

## Beschreibung

Die vorliegende Erfindung betrifft ein System aus wenigstens zwei miteinander drahtlos kommunizierenden Geräten und ein Verfahren zur Überwachung der Kommunikation zwischen den wenigstens zwei Geräten. Insbesondere betrifft die Erfindung ein System aus einem Basisgerät und wenigstens einem medizinischen oder pharmazeutischen Gerät, wie einem Infusions-, Injektions- oder Inhalationsgerät.

Es sind verschiedenste Einsatzgebiete für miteinander kommunizierende Geräte bekannt, beispielsweise im Mobilfunkbereich oder auf dem Gebiet der Personenidentifikation. Dabei besteht in der Regel eines der Geräte aus einem feststehenden Basisgerät, das eine Sende- und Empfangseinheit aufweist. Ein weiteres Gerät kann als mobiles Gerät von einem Anwender mitgeführt werden. Das mobile Gerät kann ebenfalls eine Sende- und Empfangseinheit oder nur eine Sendeeinheit oder eine Empfangseinheit umfassen. Wird zum Beispiel ein mobiles Gerät eingeschalten und eine Kommunikation mit dem Basisgerät aufgenommen, erfolgt eine Identifikation der Netzwerkadresse des mobilen Geräts und es wird ein Hinweis abgegeben, dass die Kommunikation zwischen dem Basisgerät und dem mobilen Gerät aufgenommen ist und das mobile Gerät zum Einsatz bereit ist.

Bei einem anderen Kommunikationssystem nach dem Stand der Technik sind ein feststehendes Basisgerät und ein mobiles Gerät betriebsbereit. Bei Annäherung des mobilen Geräts an das Basisgerät treten die beiden Gerät miteinander in Kommunikation, sobald ein Höchstabstand zwischen den Geräten unterschritten wird. Besteht die Kommunikation zwischen den beiden Geräten, erfolgt eine Identifikation des mobilen Geräts durch das Bastsgerät und es wird ein Hinweis über die erfolgreiche oder fehlgeschlagene Identifikation abgegeben.

Bei Mobiltelefonen ist es ferner üblich, die Qualität des Empfangs eines Signals von einer Basisstation auf einer Anzeige als Balkendiagramm anzugeben. Es wird jedoch keine Warnung abgegeben, wenn der Empfang des Signals eine Kommunikation zwischen den beiden Geräten nicht mehr gewährleistet.

US 6,441,747 B1 offenbart ein programmierbares System mit einer Basisstation und einer Anzahl drahtlos programmierbarer Biosensor-Einheiten, von denen jede einen Sendeempfänger zur bidirektionalen Kommunikation mit der Basisstation aufwiest. Nach der Registrierung/Initialisierung der Biosensor-Einheiten sendet die Basisstation eine Verbindungsanfrage an alle registrierten Biosensor-Einheiten, um ihre Funktionsfähigkeit sowie ihre Lokalisierung innerhalb des Funkkommunikationsbereichs der Basisstation sicherzustellen. Solange eine Biosensor-Einheit aktiv ist, reagiert sie auf periodische Verbindungsanfragen durch Aussendung entsprechender periodischer Antworten. Geht das Signal einer Biosensor-Einheit verloren, wird diese Biosensor-Einheit deaktiviert. Im Zuge einer solchen Deaktivierung können ein Alarm oder eine Meldung auf einem Benutzerinterface der Basisstation erzeugt werden.

Bei manchen Gerätesystemen ist es jedoch wünschenswert, eine Unterbrechung oder Störung der Kommunikation zwischen den Geräten zu erkennen, bevor diese stattfindet, um zum Beispiel Schäden und Verzögerungen bei Abläufen, die von dem Gerätesystem überwacht weiden, wie etwa bei Herstellungsprozessen, zu vermeiden. Insbesondere bei einem medizinischen oder pharmazeutischen Einsatz zweier miteinander kommunizierenden Geräte ist eine rechtzeitige Warnung eines Kommunikatiansverlusts zwischen den Geräten notwendig, um Behandlungsabläufe sicher durchführen zu können und eine kontinuierliche Versorgung des Patienten zu ermöglicht

Es ist daher eine Aufgabe der Erfindung ein System von miteinander drahtlos kommunizierenden Geräten zu schaffen, das eine kontinuierliche Kommunikation sicherstallt, Übertragungsfehler zwischen den Geräten vermeidet, die Überwachung der Kommunikation erleichtert oder vor einer bevorstehenden ungenügenden Kommunikation warnt. Ferner ist es eine Aufgabe der Erfindung ein Verfahren zur Überwachung der Kommunikation von Geräten bereit zu stellen, das eine einfache Kontrolle der Kommunikation ermöglicht und ungewünschte Unterbrechungen oder Störungen der Kommunikation zu verhindern hilft.

Die Aufgabe der Erfindung wird durch ein System aus wenigstens zwei miteinander kommunizierenden Geräten nach Anspruch 1 und ein Verfahren zur Überwachung einer Kommunikation nach Anspruch 7 gelöst. Vorteilhafte Ausgestaltungen der Erfindung gehen aus den Unteransprüchen hervor.

Demnach stehen wenigstens zwei Geräte über einen Abstand drahtlos miteinander in Kommunikation, d.h. es besteht keine physische Verbindung zwischen den Geräten. Wenigstens eines der Geräte weist eine Warneinrichtung zur Anzeige einer bestehenden oder bevor stehenden Unterbrechung oder Störung der Kommunikation auf. Vorzugsweise ist jedes Gerät des Systems mit einer Warneinrichtung ausgestattet. Dabei kann eines der Geräte eine Sendeeinheit oder eine Sende- und Empfangseinheit und ein anderes Gerät eine Empfangseinheit oder Sende- und Empfangseinheit aufweisen. Die Auswahl einer Sende- und/oder Empfangseinheit für ein Gerät hängt davon ab, ob eine uni- oder bidirektionale Kommunikation zwischen den Geräten aufgebaut werden soll. Vorzugsweise wird eine bidirektionale Kommunikation gewählt, um eine Kommunikationsüberwachung an beiden Geräten zu ermöglichen. Die Kommunikation zwischen den Geräten entsteht über ein Kommunikationssignal, das von einer Sendeeinheit eines ersten Geräts zu einer Empfangseinheit eines zweiten Geräts gesendet wird und von einem Kommunikationssignal das von dem zweiten Gerät zu dem ersten Gerät gesendet wird. Erfindungsgemäß gibt die Warneinrichtung zum Beispiel eine optische oder akustische Warnung ab, wenn eine Veränderung, eine Schwächung, eine Unterbrechung oder eine Störung des Kommunikationssignals zwischen den Geräten vorliegt. Ein Anwender kann dadurch eine Kommunikationsunterbrechung oder -störung verhindern, vorteilhafterweise bereits bevor diese auftritt. Eine kontinuierliche Kommunikation und somit eine regelmäßige Datenübertragung kann dadurch sicher gestellt werden.

Als Kommunikationssignale können zum Beispiel Hochfrequenzsignale und induktive Signale verwendet werden. Bevorzugt werden induktive Signale eingesetzt, da diese eine energiesparende Anwendung ermöglichen. Ferner kann ein Signal verwendet werden, das von den Geräten zur Datenübertragung ausgetauscht wird, oder es wird ein Signal eingesetzt, dass ausschließlich einer erfindungsgemäßen Kommunikationsüberwachung dient.

Nach dem erfindungsgemäßen Verfahren zur Überwachung einer drahtlosen Kommunikation über einen Abstand zwischen wenigstens zwei Geräten stehen die wenigstens zwei Geräte über ein Kommunikationssignal in Verbindung. Bei einer bestehenden oder bevorstehenden Unterbrechung oder Störung der Kommunikation wird von wenigstens einem der Geräte eine Warnung angezeigt oder die Signalübertragungsart geändert. Die Warnung kann dabei zum Beispiel abgegeben werden, wenn ein Höchstabstand zwischen den beiden kommunizierenden Geräten überschritten wird. Der Abstand zwischen den Geräten kann über das Kommunikationssignal ermittelt werden. Der Höchstabstand ergibt sich aus dem Abstand, über den eine sichere Kommunikation zwischen den Geräten noch gewährleistet werden kann. Vorzugsweise ist dieser Höchstabstand einstellbar, um unterschiedliche Umgebungssituationen berücksichtigen zu können.

Ferner kann eine Warnung angezeigt werden, wenn eine Empfängereinheit eines Geräts eine Veränderung, Schwächung, Unterbrechung oder Störung des von dem anderen Gerät ausgesendeten Kommunikationssignals registriert. Hierfür können zum Beispiel alle Signalcharakteristiken des Kommunikationssignals als Eigenschaften eines Soll-Signals, d.h. der Signalausbildung, wie sie bei einer ordnungsgemäßen Kommunikation vorliegt, in einem Speicher abgelegt werden. Ein aktuelles von der Sendeeinheit abgesendetes Signal kann dann beispielsweise mittels eines Mikroprozessors mit dem Soll-Signal verglichen werden. Weichen die Charakteristiken des aktuellen Signals von den Charakteristiken des Soll-Signals ab, liegt eine Veränderung oder Störung des Kommunikationssignals zwischen den beiden Geräten vor und es wird eine Warnung von der Warneinrichtung abgegeben. Dabei ist es vorteilhaft, für einzelne Charakteristiken einen Mindestwert der Abweichung zu bestimmen, um nicht bei geringen Störungen des Signals unnötigerweise eine Warnung abzugeben. Es ist natürlich auch möglich, den Vergleich zwischen einem aktuellen Signal und einem Soll-Signal nur anhand bestimmter ausgewählten Signalcharakteristiken oder nur anhand einer einzigen Signalcharakteristik durchzuführen. Vorzugsweise wird hierfür der Signalpegel bzw. die Signalamplitude herangezogen. Es wäre jedoch auch möglich, zum Beispiel das Signal-zu-Rauschverhältnis zu verwenden. Weiter kann eine verschlüsselte Information verwendet werden, die allen Geräten bekannt ist und mit einem Vergleichsverfahren, wie einem Prüfsummenverfahren, verarbeitet wird. Im Falle einer Fehlübertragung wird dann eine Warnung abgegeben.

Vorzugsweise wird das Kommunikationssignal durch periodisch abgegebene Signalsequenzen gebildet. Signalsequenzen einer solchen teilweise regelmäßigen Übertragung sind in der Computertechnik auch als "Ping"-Signale mit einer "Pong"-Antwort (RCP/IP) bekannt. Wird zum Sendesignal auch ein Antwortsignal erwartet, ermöglichen Verfahren zur Prüfung von Signalsequenzen oder Signalfrequenzen eine von anderen Geräten unabhängige Erkennung einer Störung in der Kommunikation der kommunizierenden Geräte. Hierfür sind z. B. Prüfsummenverfahren geeignet, welche die Vollständigkeit und Korrektheit der Signale überprüfen. Aufgrund einer konversen Rückantwort ("Pong") kann auf eine vollständige Kommunikation geschlossen werden. Falls keine Rückantwort erfolgt, kann eine Warnung oder die Wiederholung der "Ping"-Sequenz veranlasst werden, solange bis nach einer festgelegten Anzahl von Kommunikationsversuchen eine Warnung abgegeben wird. Vorzugsweise ist die Länge einer Periode der teilweisen regelmäßigen Übertragung, d.h. der Abstand zwischen den einzelnen Signalsequenzen, einstellbar. Die Periodenlänge kann zum Beispiel wenige zehntel Sekunden bis einige Minuten betragen. Die Verarbeitung des Kommunikationssignals, bzw. der Vergleich von aktuellem Signal und Soll-Signal, kann zum Beispiel durch einen Mikroprozessor erfolgen. Der Mikroprozessor kann dann auch ein Signal zur Abgabe der Warnung an eine Warneinrichtung in einem oder in jedem Gerät abgeben. Es ist daher nicht erforderlich die Signalverarbeitung oder den Signalvergleich in jedem der Geräte durchzuführen, um eine Warnung in jedem Gerät zu erzeugen. Anstelle einer Warnung ist es auch denkbar, die Signalübertragungsart zu wechseln, wie z. B. die Signalfrequenz, wenn eine Fehlfunktion bevorsteht oder bereits festgestellt ist. Weiter kann bei Verwendung eines nicht optimierten Netzes zur Kommunikation, aufgrund der Überwachung der Kommunikation der Geräte die Auslastung ermittelt werden. Ist aufgrund einer hohen Auslastung keine sichere Kommunikation möglich, kann eine Warnung abgegeben werden.

Durch die vorliegende Erfindung werden Schäden und Ausfälle durch eine gestörte Funktion der Geräte vermieden, da auf eine Kommunikationsstörung oder -unterbrechung rechtzeitig reagiert werden kann. Es wird eine zuverlässige Überwachung der Kommunikation zwischen den beiden Geräten ermöglicht.

Besonders bevorzugt kommt die vorliegende Erfindung bei medizinischen oder pharmazeutischen Gerätesystemen zum Einsatz. Ein solches System besteht zum Beispiel aus einem Basisgerät mit einer Sende- und Empfangseinheit und wenigstens einem medizinischen oder pharmazeutischen Gerät mit einer Sendeeinheit, einer Empfangseinheit oder einer Sende- und Empfangseinheit. Ein solches medizinisches oder pharmazeutisches Gerät kann zum Beispiel ein Infusions-, Injektions- oder Inhalationsgerät zur Verabreichung eines medizinischen oder pharmazeutischen Produkts sein oder auch ein Messgerät zur Messung verschiedener Körperparameter, wie zum Beispiel dem Blutzucker. Ein Infusions-, Injektions- oder Inhalationsgerät oder ein Messgerät ist vorzugsweise als mobiles Gerät vorgesehen, das der Anwender mit sich trägt. Natürlich ist es auch möglich, dass neben der Kommunikation mit dem Basisgerät die mobilen Geräte untereinander in Kommunikation stehen. Dies ist zum Beispiel für Infusionsgeräte für Insulin und Blutzuckermessgeräte wünschenswert. Durch die vorliegende Erfindung wird eine zuverlässige Übertragung von Daten und Anweisungen, die für eine medizinische oder pharmazeutische Behandlung notwendig sind, sichergestellt. Ferner bietet sie dem Anwender eine Kontrolle falls er ein Gerät vergessen hat. Durch die Warnung kann entschieden werden, ob es notwendig ist das Gerät mit sich zu tragen oder nicht.

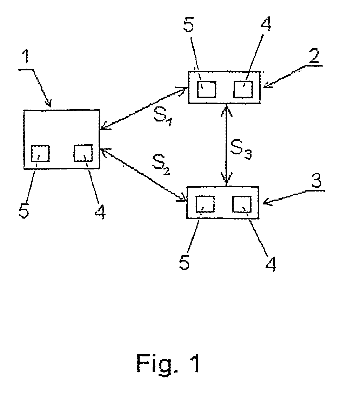

Die Erfindung soll beispielhaft anhand der Zeichnung mit der Figur 1 näher erläutert werden, in der ein erfindungsgemäßes System aus drei Geräten dargestellt ist.

In der Figur 1 ist ein erstes Gerät 1 dargestellt, das ein feststehendes Basisgerät bildet. Ein mobiles Gerät 2 steht mit dem Basisgerät 1 über ein Kommunikationssignal S₁ in Verbindung. Ein weiteres mobiles Gerät 3 steht ebenfalls mit dem Basisgerät 1 über ein Kommunikationssignal S₂ in Verbindung. Zudem stehen das mobile Gerät 2 und das mobile Gerät 3 über ein Kommunikationssignal S₃ miteinander in Verbindung.

Das mobile Gerät 2 kann zum Beispiel eine Insulinpumpe und das mobile Gerät 3 ein Blutzuckermessgerät sein. Das Basisgerät 1 kann ein Steuergerät sein, dass sowohl die Funktion der Insulinpumpe 2, als auch die Funktion des Blutzuckermessgeräts 3 registriert und steuert. Jedes der Geräte 1, 2 und 3 weist eine Sende- und Empfangseinheit 4 auf, mit der die Signale S₁, S₂ und S₃ an die anderen Geräte gesendet bzw. von diesen empfangen werden können. Zwischen den einzelnen Geräten ist daher eine bidirektionale Kommunikation vorgesehen. Weiter ist in jedem der Geräte 1, 2 und 3 eine Warneinrichtung 5 angeordnet, die bei einer bestehenden oder bevorstehenden Unterbrechung oder Störung der Kommunikationssignale eine Warnung abgibt. Ein maximaler zulässiger Höchstabstand zwischen den einzelnen Geräten, bei dessen Überschreitung die Übertragung eines Konununikationssignals nicht mehr sichergestellt werden kann, kann für die verschiedenen Geräte unterschiedlich eingestellt werden. Ferner kann die Länge einer Periode für die periodisch abgegebenen Signalsequenzen eines Kommunikationssignals für die verschiedenen Kommunikationssignale S₁, S₂ und S₃ zwischen den jeweiligen Geräten unterschiedlich eingestellt werden.

Die Erfindung wurde an einem System zur Insulinversorgung eines Patienten mit drei Geräten dargestellt. Es ist jedoch klar, dass das System um weitere Geräte ergänzt werden kann. Ferner kann das erfindungsgemäße System und das Verfahren bei einer Vielzahl von anderen technischen Gebieten eingesetzt werden.

## Patentansprüche

1. System umfassend ein Basisgerät (1) mit einer Sende- und Empfangseinheit (4) und wenigstens ein medizinisches oder pharmazeutisches Gerät (2) mit einer Sende- und Empfangseinheit (4), wobei das Basisgerät (1) und das wenigstens eine medizinische oder pharmazeutische Gerät (2) über einen Abstand miteinander drahtlos in Kommunikation stehen und über ein Kommunikationssignal miteinander in Verbindung stehen, das von den Sende- und Empfangseinheiten (4) abgegeben wird, **dadurch gekennzeichnet, dass** das wenigstens eine medizinische oder pharmazeutische Gerät (2) eine Insulinpumpe ist und das Basisgerät (1) ein Steuergerät ist, welches die Funktion der Insulinpumpe (2) registriert und steuert, wobei wenigstens eines der Geräte (1, 2) eine Warneinrichtung (5) aufweist, welche zur Abgabe einer optischen oder akustischen Warnung ausgestaltet ist, um eine bevorstehende Unterbrechung oder Störung der Kommunikation anzuzeigen, wenn die Sende- und Empfangseinheit (4) des wenigstens einen Geräts (1, 2) eine Veränderung, Schwächung, Unterbrechung oder Störung des Kommunikationssignals registriert, wobei ein Speicher vorgesehen ist, um die Signalcharakteristiken des Kommunikationssignals als Eigenschaften eines Soll-Signals abzulegen, und wobei ein Mikroprozessor vorgesehen ist, um ein aktuelles von einer Sende- und Empfangseinheit (4) abgesendetes Signal mit dem Soll-Signal zu vergleichen.

2. System nach Anspruch 1, wobei die Kommunikation zwischen den Geräten (1, 2) bidirektional ist.

3. System nach einem der vorhergehenden Ansprüche, wobei das Kommunikationssignal von periodisch abgegebenen Signalsequenzen gebildet wird und die Länge der Periode der Signalsequenzen einstellbar ist.

4. System nach einem der vorhergehenden Ansprüche, wobei das Kommunikationssignal durch eine verschlüsselte Information gebildet wird.

5. System nach einem der vorhergehenden Ansprüche, wobei das Kommunikationssignal ein induktives Signal oder ein Hochfrequenzsignal ist.

6. System nach einem der vorhergehenden Ansprüche, wobei eines der Geräte (1) ein definiertes Antwortsignal empfängt.

7. System nach einem der vorhergehenden Ansprüche, wobei ein weiteres medizinisches oder pharmazeutisches Gerät in Form eines Blutzuckermessgeräts (3) vorgesehen ist und das als Steuergerät ausgebildete Basisgerät (1) die Funktion des Blutzuckermessgeräts (3) registriert und steuert, wobei das Blutzuckermessgerät (3) mit dem Basisgerät über ein erstes Kommunikationssignal (S₂) und mit der Insulinpumpe (2) über ein zweites Kommunikationssignal (S₃) in Verbindung steht.

8. Verfahren zur Überwachung einer drahtlosen Kommunikation über einen Abstand zwischen einem Basisgerät (1) mit einer Sende- und Empfangseinheit (4) und wenigstens einem medizinischen oder pharmazeutischen Gerät (2) mit einer Sende- und Empfangseinheit (4) eines Systems nach einem der vorhergehenden Ansprüche, wobei das Basisgerät (1) und das wenigstens eine medizinische oder pharmazeutische Gerät (2) über ein Kommunikationssignal in Verbindung stehen, **dadurch gekennzeichnet, dass** das wenigstens eine medizinische oder pharmazeutische Gerät (2) eine Insulinpumpe ist und das Basisgerät (1) ein Steuergerät ist, welches die Funktion der Insulinpumpe (2) registriert und steuert, wobei wenigstens eines der Geräte (1) eine bevorstehende Unterbrechung oder Störung der Kommunikation durch eine optische oder akustische Warnung anzeigt oder eine Signalübertragungsart ändert, wobei eine Warnung angezeigt wird, wenn die Sende- und Empfangseinheit (4) des wenigstens einen Geräts (1, 2) eine Veränderung, Schwächung, Unterbrechung oder Störung des Kommunikationssignals registriert, wobei hierfür die Signalcharakteristiken des Kommunikationssignals als Eigenschaften eines Soll-Signals in einem Speicher abgelegt werden, ein aktuelles von einer Sende- und Empfangseinheit (4) abgesendetes Signal mittels eines Mikroprozessors mit dem Soll-Signal verglichen wird und eine Warnung von der Warneinrichtung (5) abgegeben wird, wenn die Charakteristiken des aktuellen Signals von den Charakteristiken des Soll-Signals abweichen.

9. Verfahren nach Anspruch 8, **dadurch gekennzeichnet, dass** für die einzelnen Charakteristiken ein Mindestwert der Abweichung bestimmt wird.

10. Verfahren nach Anspruch 8 öder 9, **dadurch gekennzeichnet, dass** nur eine Charakteristik des aktuellen Signals und des Soll-Signals verglichen wird.

11. Verfahren nach Anspruch 10, **dadurch gekennzeichnet, dass** als Charakteristik der Signalpegel bzw. die Signalamplitude verwendet wird.

12. Verfahren nach Anspruch 10, **dadurch gekennzeichnet, dass** als Charakteristik das Signal-zu-Rauschverhältnis verwendet wird.

13. Verfahren nach einem der Ansprüche 8 bis 12, wobei das Kommunikationssignal durch periodisch abgegebene Signalsequenzen gebildet wird und die Länge der Periode der Signalsequenzen eingestellt wird.

14. Verfahren nach einem der Ansprüche 8 bis 13, wobei ein weiteres medizinisches oder pharmazeutisches Gerät in Form eines Blutzuckermessgeräts (3) vorgesehen ist und das als Steuergerät ausgebildete Basisgerät (1) die Funktion des Blutzuckermessgeräts (3) registriert und steuert, wobei das Blutzuckermessgerät (3) mit dem Basisgerät über ein erstes Kommunikationssignal (S₂) und mit der Insulinpumpe (2) über ein zweites Kommunikationssignal (S₃) in Verbindung steht.

## Claims

1. A system comprising a base device (1) having a transmitting and receiving unit (4) and at least one medical or pharmaceutical device (2) having a transmitting and receiving unit (4), wherein the base device (1) and the at least one medical or pharmaceutical device (2) are in wireless communication with one another across a certain distance and communicate with one another via a communication signal that is emitted by the transmitting and receiving units (4), **characterized in that** the at least one medical or pharmaceutical device (2) is an insulin pump and the base device (1) is a control device which registers and controls the function of the insulin pump (2), wherein at least one of the devices (1, 2) has a warning device (5) which is configured for emitting an optical or acoustic warning so as to indicate an imminent interruption or disturbance of the communication when the transmitting and receiving unit (4) of the at least one device (1, 2) registers a change, attenuation, interruption or disturbance of the communication signals, wherein a memory is provided so as to save the signal characteristics of the communication signal as properties of a setpoint signal, and wherein a microprocessor is provided so as to compare an actual signal transmitted from a transmitting and receiving unit (4) with the setpoint signal.

2. The system according to claim 1, wherein the communication between the devices (1, 2) is bidirectional.

3. The system according to any one of the preceding claims, wherein the communication signal is formed by periodically emitted signal sequences and the length of the period of the signal sequences is adjustable.

4. The system according to any one of the preceding claims, wherein the communication signal is formed by encoded information.

5. The system according to any one of the preceding claims, wherein the communication signal is an inductive signal or a high-frequency signal.

6. The system according to any one of the preceding claims, wherein one of the devices (1) receives a defined response signal.

7. The system according to any one of the preceding claims, wherein a further medical or pharmaceutical device in the form of a blood sugar meter (3) is provided, and the base device (1) designed as the control device registers and controls the function of the blood sugar meter (3), wherein the blood sugar meter (3) communicates with the base device via a first communication signal (S₂) and with the insulin pump (2) via a second communication signal (S₃).

8. A method for monitoring a remote wireless communication between a base device (1) having a transmitting and receiving unit (4) and at least one medical or pharmaceutical device (2) having a transmitting and receiving unit (4) of a system according to any one of the claims, wherein the base device (1) and the at least one medical or pharmaceutical device (2) communicate via a communication signal, **characterized in that** the at least one medical or pharmaceutical device (2) is an insulin pump and the base device (1) is a control device which registers and controls the function of the insulin pump (2), wherein at least one of the devices (1) indicates an imminent interruption or disturbance of the communication through an optical or acoustic warning or changes a signal transmission mode, wherein a warning is indicated if the transmitting and receiving unit (4) of the at least one device registers a change, attenuation, interruption or disturbance of the communication signal, wherein for this purpose, the signal characteristics of the communication signal are saved in a memory as properties of a setpoint signal, an actual signal transmitted from a transmitting and receiving unit (4) is compared with the setpoint signal by means of a microprocessor, and a warning is emitted by the warning device (5) if the characteristics of the actual signal deviate from the characteristics of the setpoint signal.

9. The method according to claim 8, **characterized in that** a minimum value of deviation is determined for the individual characteristics.

10. The method according to claim 8 or claim 9, **characterized in that** only one characteristic of the actual signal and the setpoint value is compared.

11. The method according to claim 10, **characterized in that** the signal level or the signal amplitude is used as a characteristic.

12. The method according to claim 10, **characterized in that** the signal-to-noise ratio is used as a characteristic.

13. The method according to any one of the claims 8 to 12, wherein the communication signal is formed by periodically emitted signal sequences and the length of the period of the signal sequences is set.

14. The method according to any one of the claims 8 to 13, wherein a further medical or pharmaceutical device in the form of a blood sugar meter (3) is provided, and the base device (1) designed as a control device registers and controls the function of the blood sugar meter (3), wherein the blood sugar meter (3) communicates with the base device (1) via a first communication signal (S₂) and with the insulin pump (2) via a second communication signal (S₃).

## Revendications

1. Système comprenant un appareil de base (1) qui possède une unité d'émission et de réception (4) et au moins un appareil médical ou pharmaceutique (2) qui possède une unité d'émission et de réception (4), l'appareil de base (1) et/ou le ou les appareils médicaux ou pharmaceutiques (2) étant en communication entre eux à distance sans fil et étant en liaison entre eux par un signal de communication qui est émis par les unités d'émission et de réception (4), **caractérisé par le fait que** le ou les appareils médicaux ou pharmaceutiques (2) est ou sont une pompe à insuline et l'appareil de base est un appareil de commande qui enregistre et commande le fonctionnement de la pompe à insuline (2), au moins l'un des appareils (1, 2) possédant un dispositif d'avertissement (5) qui est conçu pour émettre un avertissement optique ou acoustique, pour signaler une interruption ou perturbation imminente de la communication lorsque l'unité d'émission et de réception (4) du ou des appareils (1, 2) enregistre une modification, un affaiblissement, une interruption ou une perturbation du signal de communication, une mémoire étant prévue pour mémoriser les caractéristiques de signal du signal de communication en tant que propriétés d'un signal théorique, et un microprocesseur étant prévu pour comparer au signal théorique un signal actuel émis par une unité d'émission et de réception (4).

2. Système selon la revendication 1, dans lequel la communication entre les appareils (1, 2) est bidirectionnelle.

3. Système selon l'une des revendications précédentes, dans lequel le signal de communication est formé de séquences de signaux émises périodiquement et la longueur de la période des séquences de signaux est réglable.

4. Système selon l'une des revendications précédentes, dans lequel le signal de communication est constitué par une information codée.

5. Système selon l'une des revendications précédentes, dans lequel le signal de communication est un signal inductif ou un signal à haute fréquence.

6. Système selon l'une des revendications précédentes, dans lequel l'un des appareils (1) reçoit un signal de réponse défini.

7. Système selon l'une des revendications précédentes, dans lequel il est prévu un appareil médical ou pharmaceutique additionnel sous la forme d'un appareil (3) de mesure de la glycémie, et dans lequel l'appareil de base (1) réalisé en tant qu'appareil de commande enregistre et commande le fonctionnement de l'appareil (3) de mesure de la glycémie, l'appareil (3) de mesure de la glycémie étant en liaison avec l'appareil de base par un premier signal de communication (S₂) et avec la pompe à insuline (2) par un second signal de communication (S₃).

8. Procédé pour surveiller une communication à distance sans fil entre un appareil de base (1) possédant une unité d'émission et de réception (4) et au moins un appareil médical ou pharmaceutique (2) possédant une unité d'émission et de réception (4) d'un système selon l'une des revendications précédentes, l'appareil de base (1) et le ou les appareils médicaux ou pharmaceutiques (2) étant en liaison par un signal de communication, **caractérisé par le fait que** le ou les appareils médicaux ou pharmaceutiques (2) est ou sont une pompe à insuline et l'appareil de base (1) est un appareil de commande qui enregistre et commande le fonctionnement de la pompe à insuline (2), au moins l'un des appareils (1) signalant une interruption ou perturbation imminente de la communication par un avertissement optique ou acoustique ou modifiant un mode de transmission du signal, un avertissement étant donné lorsque l'unité d'émission et de réception (4) du ou des appareils (1, 2) enregistre une modification, un affaiblissement, une interruption ou une perturbation du signal de communication, les caractéristiques de signal du signal de communication étant stockées dans une mémoire en tant que propriétés d'un signal théorique, un signal actuel émis par une unité d'émission et de réception (4) étant comparé au signal théorique au moyen d'un microprocesseur et un avertissement étant donné par le dispositif d'avertissement (5) lorsque les caractéristiques du signal réel s'écartent des caractéristiques du signal théorique.

9. Procédé selon la revendication 8, **caractérisé par le fait qu'**une valeur minimum de l'écart est établie pour les diverses caractéristiques.

10. Procédé selon l'une des revendications 8 ou 9, **caractérisé par le fait que** seule une caractéristique du signal actuel et du signal théorique est comparée.

11. Procédé selon la revendication 10, **caractérisé par le fait que** le niveau du signal ou l'amplitude du signal est utilisé comme caractéristique.

12. Procédé selon la revendication 10, **caractérisé par le fait que** le rapport signal-à-bruit est utilisé comme caractéristique.

13. Procédé selon l'une des revendications 8 à 12, dans lequel le signal de communication est formé par des séquences de signaux émises périodiquement et la longueur de la période des séquences de signaux est réglée.

14. Procédé selon l'une des revendications 8 à 13, dans lequel il est prévu un appareil médical ou pharmaceutique additionnel sous la forme d'un appareil (3) de mesure de la glycémie et l'appareil de base (1) réalisé en tant qu'appareil de commande enregistre et commande le fonctionnement de l'appareil (3) de mesure de la glycémie, l'appareil (3) de mesure de la glycémie étant en liaison avec l'appareil de base par un premier signal de communication (S₂) et avec la pompe à insuline (2) par un second signal de communication (S₃).
